# EUROPEAN PATENT APPLICATION

(11) **EP 2 173 080 A1**
(43) Date of publication of application: **07.04.2010**
(21) Application number: 08017386.7
(22) Date of filing: 02.10.2008
(51) Int. Cl.: H04L 29/08

(54) **Provision of information in a communication network**

(71) Applicant: Vodafone Holding GmbH, 40213 Düsseldorf (DE)
(72) Inventor: Lee, Sabrina, 40219 Düsseldorf (DE); Hartl, Mike, 40878 Ratingen (DE)
(74) Representative: Ring & Weisbrodt

(57) **Abstract**

The present invention relates to methods for providing information usable by means of a mobile terminal (Party A, Party B 1, Party B 2, Party B 3, Party B 4) operable in a communication network (5), using location-related services (LBS: Location Based Services; LDS: Location Dependent Services).

The invention further relates to a network node in a communication network (5), which network node is at least partly involved in providing information usable by means of a mobile terminal (Party A, Party B 1, Party B 2, Party B 3, Party B 4) operable in the communication network (5) using location-related services and is designed and/or set up to carry out at least partly a method according to the invention.

Moreover, the subject matter of the present invention is a terminal (Party A, Party B 1, Party B 2, Party B 3, Party B 4) for operation in a communication network (5) which terminal is designed and/or set up to carry out at least partly a method according to the invention, preferably in connection with a network node according to the invention.

## Description

The present invention relates to methods for providing information usable by means of a mobile terminal operable in a communication network, using location-related services (LBS: Location Based Services; LDS: Location Dependent Services).

The invention further relates to a network node in a communication network which network node is at least partly involved in providing information usable by means of a mobile terminal operable in the communication network using location-related services and is designed and/or set up to carry out at least partly a method according to the invention.

Moreover, the subject matter of the present invention is a terminal for operation in a communication network which terminal is designed and/or set up to carry out at least partly a method according to the invention, preferably in connection with a network node according to the invention.

Various methods, systems and units for providing information usable by means of a terminal operable in a communication network, in particular in a mobile radio network according to a GSM, GPRS, and/or UMTS radio network standard, using location-related services have been known in the state of the art, for instance from WO 2005/015926 A1, WO 98/21913 A2, or DE 10 2005 035 287 A1. Usually, the user of the terminal is provided with information adjusted to or coordinated with his location, taking the location of his mobile terminal in the mobile radio network into account, for instance information regarding, or of, shops, gastronomic facilities, and/or similar facilities which are within the area of the location. In this process, the corresponding information about or for the shops, gastronomic facilities and/or similar facilities located within the area of the location is stored by a computing device of the communication network comprising a database. So if a user of a terminal is staying within the location of the shops, gastronomic facilities, and/or similar facilities, the corresponding information will be transmitted to his terminal. The transmission can occur either on request of the user of the terminal, or on an automated basis, for instance when staying within the area of the location of the shops, gastronomic facilities, and/or similar facilities. What is more, an automated provision of information will usually occur in connection with corresponding communication services of the mobile radio network, which services have been subscribed to by the user.

The disadvantage of the previously known solutions is that only such information can be provided which has been stored or gathered about or for the respective location before. Another disadvantage is that the user of a terminal cannot purposefully query information required individually by him.

In view of this state of the art, the main objective of the invention is to improve the provision of information in a communication network while avoiding the described disadvantages and, moreover, to meet the continually existing need for new solutions for the provision of information according to the invention.

As a technical solution, the present invention proposes a method for providing information usable by means of a mobile terminal operable in a communication network using location-related services, which method is characterised by the following process steps to be carried out by a network node of the communication network:
- Receiving at least one information request from a user of a mobile terminal;
- Determining at least one location information with regard to the location of the user's terminal in the communication network:

- Determining at least one contact information of a mobile terminal of at least one other user, which terminal is operable in the communication network and is staying or located in a pre-determinable area around the determined location information, and/or at least one information device operable in the communication network and located in a pre-determinable area around the determined location information;
- Sending or forwarding the information request of the user to the at least one determined contact information of the terminal of the at least one other user and/or of the information device;
- Receiving at least one reply to the sent or forwarded information request;
- Providing the received reply for use by the mobile terminal of the user.

The invention takes advantage of the realisation that an improvement of provision of information can be achieved if the information to be provided upon an information request is provided by at least one other user of a mobile terminal and/or at least one information device operable in the communication network, wherein the at least one other user and/or the information device is/are located in a pre-determinable area around the determined location information. According to the invention, in this way, a need for information of the user of a terminal sending the information request can be fulfilled in a purposeful manner.

Moreover, if the method is conducted according to the invention, social contacts and/or similar relationships between the users of the mobile terminals can be established. So for instance, the user sending the information request can ask for users in the pre-determinable area who can reply to his information request or help him, in particular by the users meeting in person. An application scenario according to the invention provides for instance that a user staying in a shopping mall or a similar public facility sends a question with regard to the location of a nearby toilet or a question with regard to operating a ticket issuing machine or a similar device as information request. Other users and/or corresponding information devices located in a pre-determinable area around the determined location information of the user sending the information request can then reply to the information request. Beneficially, the users can contact each other or meet each other in person within the scope of, and/or using the reply to the information request, in particular in order to help each other or the like directly on the spot.

In another embodiment of the invention, the received reply is provided by sending the reply to the mobile terminal of the user. Beneficially, the reply is sent by means of a messaging service of the communication network, preferably by SMS or MMS.

In another embodiment of the invention, the location information is determined using terminal-based and/or network-based localisation technologies. Beneficially, the at least one location information in relation to the location of the terminal of the user in the communication network is determined by means of a device of the terminal. In another embodiment of the invention, the at least one location information in relation to the location of the terminal of the user in the communication network is determined by means of at least one service of the communication network. The location information is beneficially determined at least partly in an automated, preferably network-initiated manner. According to the invention, at least one sending and at least one receiving process using the communication network is carried out in determining the location information.

If the respective location information is determined exclusively by means of a device of the mobile terminal, preferably satellite-based systems such as GPS (GPS: Global Positioning System) are used. Beneficially, the current location can be determined very precisely in this manner. A further improvement of localisation is beneficially achieved if network-based localisation techniques are used in addition. A particularly preferred embodiment therefore provides the use of A-GPS (A-GPS: Assisted GPS). In order to be able to offer the method according to the invention as independent as possible from the equipment of the respective terminal of the communication network user, it is provided according to the invention that also network-based methods, such as so-called Cell-ID methods (ID: Identifier) are used for determining the location. In this manner, also mobile terminals can be beneficially located which are not equipped with a device for determining their own position without network support. E-OTD (E-OTD: Enhanced Observed Time difference) beneficially constitutes a localisation method which offers the possibility to determine the respective location information by means of at least one service of the communication network. In another preferred embodiment, the respective location information is determined using an Indoor Positioning System. This beneficially offers the possibility to determine the location information inside buildings, since the common GPS receivers are usually not suitable for receiving signals inside buildings. Methods which can be used here according to the invention are based for instance also on radio cells. When determining a position by means of radio cells, however, it is usually not possible to determine on which floor of a building a person is located. Therefore, a particularly preferred embodiment provides that the Indoor Positioning System makes use of local radio networks and/or short-range radio, in particular WLAN or Bluetooth, respectively, for position determination. Consequently, the location of a mobile terminal can be determined more precisely by means of an access point correspondingly installed in a building.

Another beneficial embodiment of the invention provides that the contact information of the at least one other user and/or of the information device is determined by querying a database provided by the communication network, wherein at least one allocation between the contact information and the location information is given in the database. In a preferred embodiment of the invention, the database is the home location register (HLR: Home Location Register) and/or the visitor location register (VLR: Visitor Location Register) of a mobile radio network. In another embodiment of the invention, the database is a database which can be connected with the home location register and/or the visitor location register of a mobile radio network.

In a preferred embodiment of the invention, the pre-determinable area around the determined location information of the mobile terminal of the user can be set by the user himself. In this manner, the user can set the pre-determinable area, in particular with regard to its size, in accordance with his current needs and/or other preferences.

As a technical solution to the main objective mentioned in the beginning, the present invention further proposes a method for providing information usable by means of a mobile terminal operable in a communication network, using location-related services, which method is characterised by the following process steps to be carried out by a mobile terminal:
- Sending of at least one information request to a network node of the communication network;
- Receiving at least one reply to the sent information request;
- Signalling of the received reply by the mobile terminal.

The location information is beneficially sent to the network node of the communication network, preferably together with the information request. For this purpose, the location information is beneficially determined in advance by the terminal of the user.

As a technical solution to the main objective mentioned in the beginning, the present invention further proposes a method for providing information usable by means of a mobile terminal operable in a communication network, using location-related services, which method is characterised by the following process steps to be carried out by a mobile terminal and/or by an information device operable in the communication network:
- Receiving an information request from a user;
- Gathering at least one reply to the sent information request by means of the mobile terminal and/or by means of the information device;
- Sending the reply to a network node of the communication network.

In another particularly beneficial embodiment of the invention, the information request of the user is created by a voice input by the user by means of the terminal of the user and/or by a text input by the user by means of the terminal of the user. The possibility to generate the information request by means of voice input beneficially enables a natural language information request. A voice message generated by voice input as information request is beneficially converted to a text message. The generation, and/or conversion of a voice input or voice message into a text input or text message, respectively, is beneficially carried out either by the terminal of the user or by a network node of the communication network. What is more, the voice message usable as information request can be generated and converted by the terminal itself, for which purpose the terminal comprises appropriate recording and converting devices. Furthermore, the voice message can be recorded within the scope of a communication connection between the terminal and the network node of the communication network by means of a corresponding device of the network node of the communication network and then be converted to a text message by a corresponding device. Furthermore, a voice message recorded on the part of the terminal of the user can be transmitted via a communication connection to the network node of the communication network and can there be converted to a text message. Finally, there is the possibility to transmit a voice message recorded by a terminal, which voice message has been converted to a text message by the terminal, via a communication connection as an information request to the network node of the communication network.

Subject matter of the present invention is further a network node in a communication network which network node is at least partly involved in providing information usable by means of a mobile terminal operable in the communication network, using location-related services, and which is designed and/or set up to carry out at least partly a method according to the invention.

The network node is beneficially a network node in a mobile radio network forming a service area with a cellular network structure composed of radio cells, in particular a mobile radio network in accordance with a GSM, GPRS, and/or UMTS radio network standard. A preferred embodiment of the invention provides that the network node is a network node of a micro or pico cell of the mobile radio network.

Moreover, the subject matter of the present invention is a terminal for operation in a communication network which terminal is designed and/or set up to carry out at least partly a method according to the invention, preferably in connection with a network node according to the invention.

In another embodiment of the invention, the terminal comprises at least one control element, wherein the sending of an information request and/or the sending of a reply to an information request can be initiated by means of the control element. A particularly preferred embodiment of the invention provides that the function of the control element consists exclusively in initiating the sending of an information request and/or the sending of a reply to an information request.

The terminal is beneficially a mobile terminal operable in a mobile radio network according to a GSM, GPRS, and/or UTMS radio network standard, preferably in the form of a mobile telephone.

Further details, characteristics and advantages of the invention are explained in the following in more detail based on the exemplary embodiments shown in the figure of the drawing. In this figure:

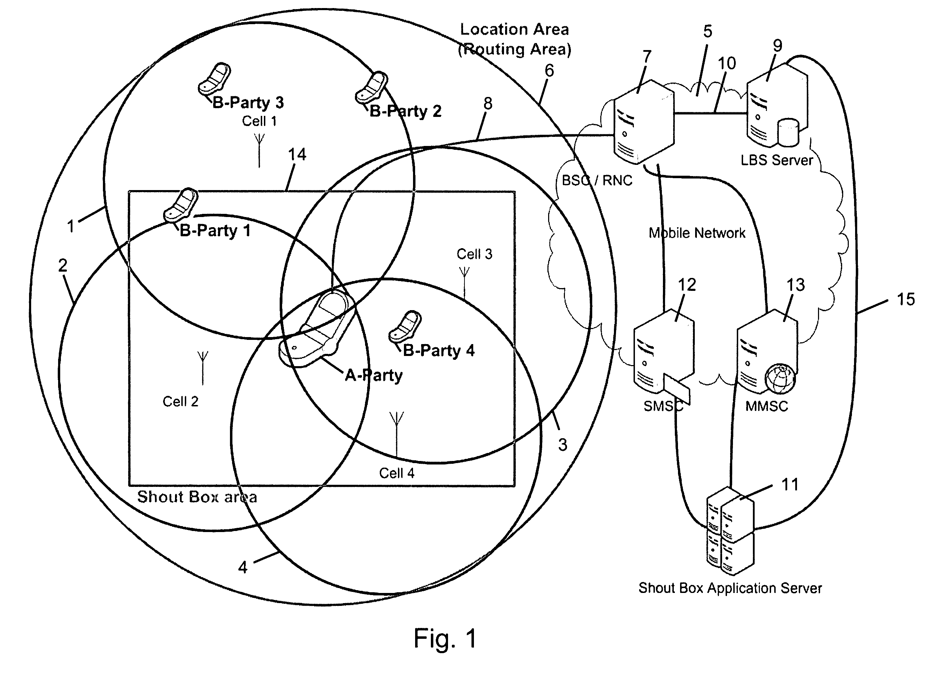

Fig. 1 shows a schematic diagram of an exemplary embodiment for the provision of information according to the invention, using location-related services.

Fig. 1 shows a basic exemplary embodiment of provision of information according to the invention, using location-related services in a mobile radio network 5 (here symbolically represented by a cloud) according to a GSM, GPRS, and/or UTMS radio network standard forming a service area 6 with a cellular network structure built up of radio cells 1, 2, 3, and 4 (here in an exemplary manner Cell 1, Cell 2, Cell 3, and Cell 4). The service area (Location Area (Routing Area)) 6 of mobile radio network 5 shown in Fig.1 is in the present case operated by a base station controller BSC/RNC (BSC: Base Station Controller; RNC: Radio Network Controller) 7 of the mobile radio network 5, which base station controller is shown in an exemplary manner in Fig. 1. At the same time, mobile terminals of subscribers or users, respectively, in the present case Party A, Party B 1, Party B 2, Party B 3, and Party B 4, which mobile terminals are operable in mobile radio network 5 and are staying in service area 6 formed by mobile radio network 5, are registered by or on the part of the base station controller BSC/RNC 7 in the corresponding radio cells 1, 2, 3, and 4 (Cell 1, Cell 2, Cell 3, and Cell 4) with regard to their availability and their location, respectively. In Fig. 1, the subscribers or users Party A, Party B 1, Party B 2, Party B 3, and Party B 4, respectively, are symbolically represented by the respective mobile telephones Party A, Party B 1, Party B 2, Party B 3, and Party B 4 used by them. The registration of the subscribers or users Party A, Party B 1, Party B 2, Party B 3, and Party B 4, respectively, by the base station controller BSC/RNC 7 of mobile radio network 5 in the present case comprises at least one information (contact information) for contacting the respective subscriber or user Party A, Party B 1, Party B 2, Party B 3, and Party B 4, respectively, in mobile radio network 5. In the present case, the contact information used is beneficially the MSISDN (MSISDN: Mobile Subscriber Integrated Services Digital Network Number) assigned by the mobile radio network 5 to the respective subscriber or user Party A, Party B 1, Party B 2, Party B 3, and Party B 4, respectively.

In the exemplary embodiment shown in Fig. 1, the subscriber Party A initially sends an information request, in the following also referred to as "shout", to the network node of mobile radio network 5 responsible for him or his mobile terminal, respectively, in the present case the base station controller BSC/RNC 7. In Fig. 1, the sending of the information request from the mobile terminal Party A to the base station controller BSC/RNC 7 and the receiving of the information request by the base station controller BSC/RNC 7 is represented by the communication connection 8 marked with reference numeral 8 between the mobile terminal Party A and the base station controller BSC/RNC 7.

In the present case, the base station controller BSC/RNC 7 determines upon and/or after receipt of the information request (shout) from the user Party A at least one location information with regard to the location of the terminal of the user Party A in the mobile radio network. The location information in the present case is determined using terminal-based and/or network-based localisation technologies by means of an LBS server 9 represented in an exemplary manner in Fig. 1. The base station controller BSC/RNC 7 and the LBS server 9 are in the present case connectable or connected with each other by the communication connection 10, in Fig. 1 marked with reference numeral 10, between the base station controller BSC/RNC 7 and the LBS server 9.

In the present case, the information request (shout) of the user Party A is transmitted as an SMS or MMS together with the determined location information of the user Party A to a computing device (shout box application server) 11 of the mobile radio network 5 realising or handling the information provisioning service according to the invention. Involved in the transmission are corresponding switching devices of the mobile radio network 5, of which switching devices the SMSC 12 (SMSC: Short Message Service Center) and the MMSC 13 (MMSC: Multimedia Messaging Center) are shown in an exemplary manner in Fig. 1.

In the exemplary embodiment of a provision of information according to the invention represented in Fig. 1, the computing device (shout box application server) 11, using the LBS server 9, then determines the location information of the other subscribers or users staying in a pre-determinable area 14, in the following also referred to as shout box area, in the present case of the other subscribers or users Party B 1 and Party B 4. For this purpose, the computing device (shout box application server) 11 and the LBS server 9 are in the present case connectable or connected with each other by the communication connection 15, in Fig. 1 marked with reference numeral 15, between the computing device (shout box application server) 11 and the LBS server 9.

The other subscribers or users Party B 1 and Party B 4 have - just like the subscriber or user Party A - registered with the mobile radio network 5 for utilisation of the information provisioning service according to the invention (in the following also referred to as Location Based Shout-Box or Location Based Shout-Box Service). Within the scope of registration, the users or subscribers can beneficially set individual settings, preferences, and/or similar features for the information request and/or for replies to corresponding information requests. Within the scope of registration, the subscriber Party A in the present case has set or pre-determined for instance the size of the pre-determinable area (shout box area) 14 as an individual setting for the Location Based Shout-Box Service according to the invention. The pre-determinable area (shout box area) 14 can beneficially be set even in dependence on the respective location of the user, in particular in order to take distinctive local features into account.

The computing device (shout box application server) 11 then forwards the information request of the user Party A to the respective other users Party B 1 and Party B 4 using their contact information (MSISDN), in the present case by means of an SMS and/or an MMS. The forwarding of the information request of the user Party A to the other users Party B 1 and Party B 4 and the receipt of the forwarded information request of the user Party A by the other users Party B 1 and Party B 4 is not explicitly shown in Fig. 1 for reasons of clarity.

If the users Party B 1 and/or Party B 4 reply to the forwarded information request of the user Party A (in Fig. 1 not explicitly shown for reasons of clarity), the respective reply is forwarded to the terminal of the user Party A by means of SMS or MMS via the mobile radio network 5, using the contact information of the user Party A, via the switching devices SMSC 12 and MMSC 13 of mobile radio network 5, in the present case for instance via a communication connection 8 between the mobile terminal of the user Party A and the base station controller BSC/RNC 7. The reply or replies, respectively, are then signalled by the terminal of the user Party A, beneficially together with the respective contact information of the other user Party B 1 or Party B 4, respectively, so that the user Party A can get into further contact with the other users Party B 1 or Party B 4, if he is interested in doing so and/or has the need to do so.

The exemplary embodiments of the invention represented in the figure of the drawing and described in connection with the same only serve to explain the invention and are in no way restrictive for the same.

### List of reference numerals:

- 1: Radio cell (mobile radio network (5))
- 2: Radio cell (mobile radio network (5))
- 3: Radio cell (mobile radio network (5))
- 4: Radio cell (mobile radio network (5))
- 5: Mobile radio network
- 6: Service area (Location Area (Routing Area))
- 7: Base station controller (BSC/RNC) (service area (6))
- 8: Communication connection (Party A <=> BSC/RNC)
- 9: Localisation service device (LBS server)
- 10: Communication connection (BSC/RNC (7) <=> LBS server (9))
- 11: Computing device/shout box application server
- 12: Switching device (SMCS)
- 13: Switching device (MMCS)
- 14: Pre-determinable area (shout box area)
- 15: Communication connection (shout box application server (11) <=> LBS server (9))
- Party A: Subscriber or user/mobile terminal
- Party B 1: Subscriber or user/mobile terminal
- Party B 2: Subscriber or user/mobile terminal
- Party B 3: Subscriber or user/mobile terminal
- Party B 4: Subscriber or user/mobile terminal

## Claims

1. Method for providing information usable by means of a mobile terminal (Party A, Party B 1, Party B 2, Party B 3, Party B 4) operable in a communication network (5), using location-related services (LBS: Location Based Services; LDS: Location Dependent Services),
**characterised by** the following process steps to be carried out by a network node of communication network (5):
- Receiving at least one information request from a user of a mobile terminal (Party A);
- Determining at least one location information with regard to the location of the user's terminal (Party A) in the communication network (5);
- Determining at least one contact information of the mobile terminal of at least one other user (Party B 1, Party B 4), which terminal is operable in the communication network (5) and is staying or located in a pre-determinable area (14) around the determined location information, and/or at least one information device operable in the communication network (5) and located in a pre-determinable area around the determined location information;
- Sending or forwarding the information request of the user (Party A) to the at least one determined contact information of the terminal of the at least one other user (Party B 1, Party B 4) and/or of the information device;
- Receiving at least one reply to the sent or forwarded information request;
- Providing the received reply for use on the part of the mobile terminal of the user (Party A).

2. Method according to Claim 1, **characterised in that** the provision of the received reply is realised by sending the reply to the mobile terminal of the user (Party A).

3. Method according to Claim 2, **characterised in that** the reply is sent by means of a messaging service of the communication network (5), preferably by SMS or MMS.

4. Method according to one of the claims 1 to 3, **characterised in that** the location information is determined by using terminal-based and/or network-based localisation technologies.

5. Method according to one of the claims 1 to 4, **characterised in that** the location information is determined by means of a device of the mobile terminal of the user (Party A).

6. Method according to one of the claims 1 to 5, **characterised in that** the location information is determined by means of at least one service of the communication network (5).

7. Method according to one of the claims 1 to 6, **characterised in that** the location information is determined at least partly in an automated, preferably network-initiated manner.

8. Method according to one of the claims 1 to 7, **characterised in that** in determining the location information, at least one sending and at least one receiving process is carried out using the communication network (5).

9. Method according to one of the claims 1 to 8, **characterised in that** the contact information of the at least one other user (Party B 1, Party B 4) and/or of the information device is determined by querying a database provided by the communication network (5), wherein at least one allocation between the contact information and the location information is given in the database.

10. Method in accordance with one of the Claims 1 to 9, **characterised in that** the pre-determinable area (14) around the determined location information of the mobile terminal of the user (Party A) can be set by the user (Party A).

11. Method for providing information usable by means of a mobile terminal (Party A, Party B 1, Party B 2, Party B 3, Party B 4) operable in a communication network (5), using location-related services (LBS: Location Based Services; LDS: Location Dependent Services),
**characterised by** the following process steps to be carried out by a mobile terminal (Party A):
- Sending of at least one information request to a network node of the communication network (5);
- Receiving at least one reply to the sent information request;
- Signalling of the received reply by the mobile terminal (Party A).

12. Method according to Claim 11, **characterised in that** the location information is sent to the network node of the communication network (5), preferably together with the information request.

13. Method for providing information usable by means of a mobile terminal (Party A, Party B 1, Party B 2, Party B 3, Party B 4) operable in a communication network (5), using location-related services (LBS: Location Based Services; LDS: Location Dependent Services),
**characterised by** the following process steps to be carried out by a mobile terminal (Party B 1, Party B 4) and/or by an information device operable in the communication network:
- Receiving an information request from a user (Party A);
- Gathering at least one reply to the sent information request on the part of the mobile terminal (Party A, Party B 1, Party B 4) and/or on the part of the information device;
- Sending the reply to a network node of the communication network (5).

14. Method according to one of the claims 1 to 13, **characterised in that** the information request of the use (Party A) is generated by means of a voice input made on the part of the terminal of the User (Party A) and/or by means of a text input made on the part of the terminal of the user (Party A).

15. Method according to Claim 14 *[15 in the original German text, transl. note],*
**characterised in that** a voice message recorded by voice input is converted to a text message.

16. Network node in a communication network (5) which is at least partly involved in providing information usable by means of a mobile terminal (Party A, Party B 1, Party B 2, Party B 3, Party B 4) operable in the communication network (5), using location-related services (LBS: Location Based Services; LDS: Location Dependent Services), **characterised in that** this network node is designed and/or set up to at least partly carry out a method according to one of the claims 1 to 15.

17. Network node according to Claim 16, **characterised in that** the network node is a network node in a mobile radio network (5) forming a service area with a cellular network structure built up of radio cells (1, 2, 3, 4), in particular a mobile radio network (5) according to a GSM, GPRS, and/or UMTS radio network standard.

18. Network node according to Claim 17, **characterised in that** the network node is a network node of a micro or pico cell of the mobile radio network (5).

19. Terminal (Party A, Party B 1, Party B 2, Party B 3, Party B 4) to be operated in a communication network (5), **characterised in that** the terminal is designed and/or set up to at least partly carry out a method according to one of the Claims 1 to 15, preferably in connection with a network node according to one of the Claims 16 to 18.

20. Terminal (Party A, Party B 1, Party B 2, Party B 3, Party B 4) according to Claim 19, **characterised in that** the terminal comprises at least one control element, wherein the sending of an information request and/or the sending of a reply to an information request can be initiated by means of the control element.

21. Terminal (Party A, Party B 1, Party B 2, Party B 3, Party B 4) according to Claim 20, **characterised in that** the function of the control element consists exclusively in initiating the sending of an information request and/or the sending of a reply to an information request.

22. Terminal (Party A, Party B 1, Party B 2, Party B 3, Party B 4) according to one of the Claims 19 to 21, **characterised in that** the terminal (Party A, Party B 1, Party B 2, Party B 3, Party B 4) is a mobile terminal (Party A, Party B 1, Party B 2, Party B 3, Party B 4) operable in a mobile radio network (5) according to a GMS, GPRS, and/or UMTS radio network standard, preferably in the form of a mobile telephone (Party A, Party B 1, Party B 2, Party B 3, Party B 4).
